# EUROPÄISCHE PATENTSCHRIFT

(11) **EP 0 927 625 B1**
(45) Veröffentlichungstag und Bekanntmachung des Hinweises auf die Patenterteilung: **24.04.2002**
(21) Anmeldenummer: 98250443.3
(22) Anmeldetag: 18.12.1998
(51) Int. Cl.: B29C 59/00, B23K 26/00, B60R 21/20

(54) **Verfahren zur Einarbeitung einer unsichtbaren Reissnaht in schaumhinterlegte Kaschierungsfolien**
Process for manufacturing an invisible tear seam in surface layers foamed on their back
Procédé pour réaliser un joint invisible de rupture sur des feuilles de revêtement moussées sur leur envers

(30) Priorität: 05.01.1998 DE 19800815
(43) Veröffentlichungstag der Anmeldung: 07.07.1999
(73) Patentinhaber: SAI Automotive SAL GmbH, 76732 Wörth am Rhein (DE)
(72) Erfinder: Elsner, Hans, 76287 Rheinstetten (DE)
(74) Vertreter: Pfenning, Meinig & Partner

(56) Entgegenhaltungen:
- EP-A- 0 711 627
- WO-A-99/01317
- DE-A- 3 310 921
- DE-A- 4 018 567
- US-A- 3 909 582
- US-A- 5 456 490
- US-A- 5 632 914

## Beschreibung

Die Erfindung betrifft ein Verfahren der im Oberbegriff des Anspruchs 1 erläuterten Art.

Im zunehmenden Maße werden im Inneneraum von Kraftfahrzeugen "unsichtbare" Airbags sowohl als Beifahrerairbags als auch als Seitenairbags im Türbereich gewünscht, das heißt die sichtseitige Kaschierung des Öffnungsbereiches des Airbags, der meist eine oder zwei Klappen aufweist, soll dieser. Bereich möglichst markierungsfrei überspannen. Dabei ist es aber unabdingbar für die Funktion des Airbags, daß im Falle seiner Auslösung die Kaschierungsfolie definiert reißt und das Öffnen der Abdeckklappen des Airbags nicht behindert. Hierzu ist eine Vielzahl von Lösungswegen vorgeschlagen worden, die sich aber auf zwei Grundmuster zurückführen lassen:
1. die Anwendung von die Kaschierungsfolie aufreißenden messerähnlichen Hilfswerkzeugen, und
2. die Querschnittsschwächung der Kaschierungsfolie längs einer vorgesehenen Reißlinie.

Beispielsweise sei zu der Anwendung von "Hilfsmessern" die US 5 316 335 genannt, zu der Querschnittsschwächung längs der Reißnaht das DE 295 11 172, in dem eine mechanische Querschnittsschwächung durch Schneiden beschrieben wird. Von großer Bedeutung für die Anwendung querschnittsgeschwächter Kaschierfolien als Airbagabdeckung ist das in der DE 196 36 429 A1 beschriebene "Verfahren zur Herstellung einer Schwächelinie mittels Laser". In dieser Druckschrift wird die Herstellung einer Schwächelinie mittels steuerbar gepulster Laserstrahlung beschrieben, mit der die Schwächelinie als Folge von eingebrannten Sacklochern erzeugt wird. Die entstehende Schwächelinie, d.h. die Reißnaht, ist auf der unbearbeiteten Oberfläche nicht sichtbar und weist eine reproduzierbare Bruchfestigkeit auf. Als besonders vorteilhaft wird die Anwendung dieses Verfahrens auf das Schwächen von flachen Verbundstoffen angegeben, beispielsweise auf die Herstellung von Reißnähten in schaumstoffhinterlegten Kaschierungsfolien im Airbagbereich. Es ist mit Laserperforation sogar möglich, Schwächelinien in komplette Formteile einzubringen, wobei diese Formteile aus einem starren Trägerteil, beispielsweise einem Holz- oder Kunststoff-Formteil, und einer schaumstoffhinterlegten Kaschierungsfolie bestehen, wie dies aus der WO-A-99 011 317 bekannt ist. In einem derartigen Dreifach-Verbund erweist sich vor allem die Schaumstoffhinterlegung bei der Laserperforation als problematisch. Versuche ergaben nämlich, daß zwar die Folienschwächung definiert erfolgt, daß aber das "Durchbrennen" der Schaumstoffhinterlegung mit Laserstrahlen einen größeren Bereich der Hinterlegung schädigt, der sich auf der Sichtseite durch "Einfallen" der Kaschierungsfolie markieren kann. Vor allem besteht diese Gefahr nach der Einwirkung von Temperaturwechseln, wie Klimatests gezeigt haben. Andererseits bietet die Laserschwächung erhebliche Vorteile, vor allem bei der Berücksichtigung von Dickentoleranzen der Kaschierfolien als Folge von Oberflächenstrukturierungen und/oder Fertigungstoleranzen. Das heißt, da die Perforation der Trägerteile bei kompletten, fertig kaschierten Formteilen keine Probleme bereitet, daß die Problemzone die Schaumstoffhinterlegung ist, gleichgültig, ob man Reißnähte im kompletten Formteil oder in Bahnware aus Schaumstoff-Folienverbund durch Laserbehandlung herstellt.

Es stellt sich daher die Erfinducgsaufgabe, das Verfahren der Querschnittsschwächung von schaumstoffhinterlegten Kaschierungsfolien zur Erzeugung einer Reißnaht durch Laserstrahlen so zu verbessern, daß eine Markierung auf der Sichtseite der Kaschierungsfolie mit Sicherheit vermieden wird.

Diese Aufgabe wird durch die im Anspruch 1 angegebene Vorgehensweise gelöst; die Ansprüche 2 bis 5 geben vorteilhafte Weiterbildungen der Erfindung an.

Dadurch, daß die Schaumstoffhinterlegung der Kaschierungsfolie im Bereich der Lasereinwirkung für die Dauer dieser Einwirkung komprimiert wird, sind für den Laserstrahl vergleichbare Werkstoffdichten sowohl für die Kaschierungsfolie als auch für die Schaumstoffhinterlegung vorgegeben. Dabei erfolgt der Lasereinbrand im komprimierten Schaumstoff mit vergleichbarer "Schärfe" wie in der Folie; die diffusere Schwächezone im Schaumstoff, die zum "Einfallen" dieses Bereiches nach der Laserbehandlung und damit zur Markierung auf der Sichtseite führen kann, entfällt. Auch nach der Entspannung des Schaumstoffes nach der Laserbehandlung ist die Reißnaht im Schaumstoff definiert vorgegeben und ihre Breite auf ein Minimum reduziert, wodurch die Gefahr der Markierung dieser Linie auf der Sichtseite der Kaschierung beseitigt ist.

Die Kompression der Schaumstoffhinterlegung kann in einfacher Weise durch ein ein- oder doppelseitig wirkendes Rollenpaar durchgeführt werden, wobei die Rollen gemeinsam mit dem Laser bzw. mit dem Sensor zur Tiefenbestimmung der Perforation die Linie der zu bildenden Reißnaht abfahren. Diese Lösung ermöglicht es, eine kompakte Lasereinheit zu verwirklichen. Es kann jedoch auch zweckmäßig sein, die Kompression der Schaumstoffhinterlegung durch stationäres schablonenförmiges Preßwerkzeug zu bewirken, vor allem dann, wenn gleiche Reißnahtmuster in großer Stückzahl produziert werden sollen.

Die Schaumstoffhinterlegung ist "schubweich", d.h. es ist in gewissem Umfang möglich, ihre Oberflächen gegeneinander zu verschieben, wenn Schubkräfte eingeleitet werden. Wird bei der Kompression der Schaumstoff zusätzlich einer Schubkraft unterworfen, die eine Komponente quer zur Reißnahtrichtung hat, so resultiert daraus im Schaumstoff eine Materialverschiebung quer zur Reißnahtrichtung, die sich nach einer Aufhebung der Kompression zurückstellt. Wird daher im Stadium der Materialverschiebung bei der Kompression die Laserbehandlung durchgeführt, so liegt die perforierte Zone im Schaumstoff nicht senkrecht unter der Reißnaht in der Kaschierungsfolie, sondern verläuft geneigt, wenn die Kompression nach dem Lasern aufgehoben wird. Die Gefahr einer Markierung der Reißnaht auf der Sichtseite der Kaschierungsfolie wird dadurch weiter vermindert, da sich unterhalb der Reißnaht immer noch stützende Bereiche in der Schaumstoffhinterlegung finden. Oberflächen des Kompressionswerkzeuges mit großem Reibbeiwert gegenüber der schaumstoffhinterlegten Kaschierungsfolie begünstigen dabei die Einleitung von Schubkräften in den Schaumstoff; sie ermöglichen darüber hinaus, wenn die hohen Reibbeiwerte durch Polymerbelegung der Oberflächen erzeugt werden, eine möglichst große Oberflächenschonung der Kaschierungsfolie.

Die Erfindung wird nunmehr anhand eines in den Fign. 1 bis 3 dargestellten Ausführungsbeispiels näher erläutert, wobei die Verhältnisse am Beispiel der Kompression der Schaumstoffhinterlegung mit überlagerter Schubkraft gezeigt werden, und zwar für den Fall eines kompletten Formteils. Es zeigen:
- Fig. 1: eine Laseranordnung vor der Kompression des Schaumstoffes,
- Fig. 2: die Laseranordnung während des Perforierens im Kompressionszustand des Schaumstoffes, und
- Fig. 3: den Verlauf eines Perforationskanals nach der Dekompression des Schaumstoffes und der Rückstellung der Schubverformung.

Alle Figuren enthalten schematisierte Schnittdarstellungen.

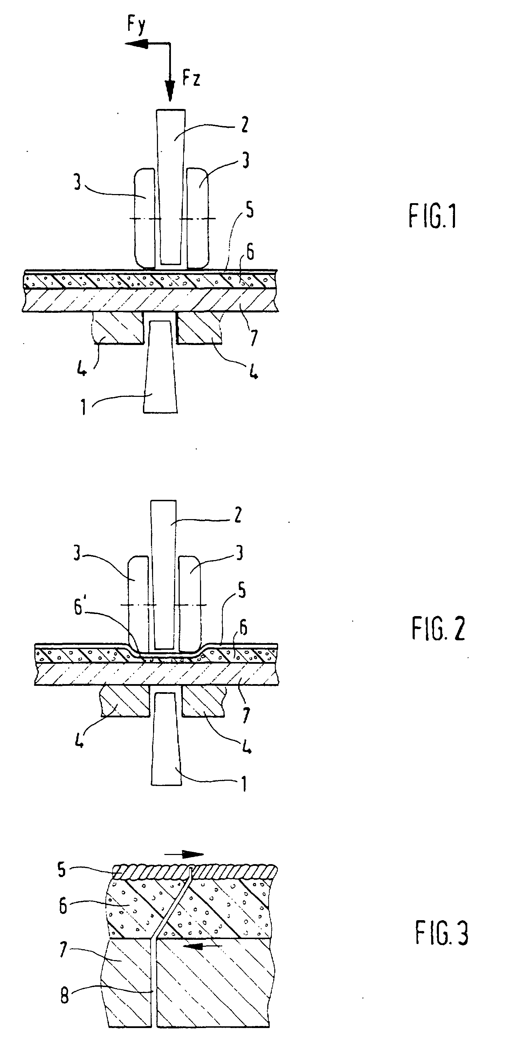

In den Figuren bedeuten 1 einen Laserkopf und 2 einen Sensor zur Tiefenbestimmung der Perforation. Mit 3 ist ein Rollenpaar zum Aufbringen der Kompression und der Schubkraft, und mit 4 das Gegenlager für die Rollen 3 bezeichnet. Dieses Gegenlager 4 ist im vorliegenden Fall, in ein komplettes Formteil "gelasert", formschlüssig zum Formteil ausgebildet. Das Formteil besteht aus einem Trägerteil 7, einer Schaumstoffhinterlegung 6 und einer Kaschierungsfolie 5. Fig. 1 zeigt die Laseranordnung vor Beginn der Kompression. Gegenlager 4 und Laserkopf 1 sind zueinander ortsfest, Rollenpaar 3 und Sensor 2 sind quer zur senkrecht zur Zeichenebene verlaufenden Reißnahtrichtung in der dargestellten Weise gegenüber der Kombination Gegenlager ./. Laserkopf versetzt. Die aufgebrachte Kompressionskraft hat in Dickenrichtung des Formteils die Komponente F_{z} und in Oberflächenrichtung die den Schub verursachende Komponente F_{y}.

Fig. 2 zeigt die Wirkung der Kompression: Unter den Rollen 3 ist ein stark komprimierter Bereich 6' im Schaumstoff 6 entstanden. Gegenlager 4, Laserkopf 1, Kompressionsrollen 3 und Sensor 2 sind nunmehr in fluchtender Position, ermöglicht durch die Schubweichheit des Schaumstoffes 6 (die Schubbewegung ist in den Fign. 1 bis 3 der Deutlichkeit wegen übertrieben groß dargestellt). In dieser Position erfolgt das Einbrennen der punktweisen oder kontinuierlichen Perforation durch Betätigung des Laserkopfes 1. Ist der Schaumstoff fertig perforiert und damit die Reißnaht fertiggestellt, so stellt sich nach Wegnahme der Kompressionskraft nicht nur die ursprüngliche Dicke der Schaumstoffhinterlegung 6 wieder her, sondern auch deren Schubverformung wird durch die Schaumelastizität aufgehoben, wie Fig. 3 stark vergrößert zeigt. Der Perforationskanal 8 knickt dabei in der dargesteilten Weise ab, d.h. unterhalb des Kanalbereiches in der Kaschierungsfolie 5 kommt dabei überwiegend nichtperforierter Schaumstoff zu liegen, der ein Einfallen der Kaschierungsfolie 5 im Bereich der Reißnaht verhindert.

## Patentansprüche

1. Verfahren zum Herstellen einer Reißnaht in einer auf einer einer Sichtseite entgegengesetzten Rückseite mit Schaumstoff hinterlegten, den Führungskanal eines Airbags am in den Innenraum eines Kraftfahrzeugs weisenden Ende überdeckenden Kaschierungsfolie, wobei die Reißnaht durch Querschnittsschwächung der Kaschierungsfolie mit Hilfe eines von der Rückseite her durch den Schaumstoff hindurchgeführten Laserstrahls derart gebildet wird, daß sie sich sichtseitig möglichst wenig abzeichnet,
**dadurch gekennzeichnet, daß** der Schaumstoff (6) im Bereich der Lasereinwirkung für die Dauer dieser Einwirkung komprimiert wird.

2. Verfahren nach Anspruch 1, **dadurch gekennzeichnet, daß** die Kompression des Schaumstoffs (6) zumindest einseitig durch Rollen (3) bewirkt wird, die gemeinsam mit einem Laser (1) entlang der zu bildenden Reißnaht geführt werden.

3. Verfahren nach Anspruch 1, **dadurch gekennzeichnet, daß** die Kompression des Schaumstoffs (6) durch ein schablonenförmiges Preßwerkzeug bewirkt wird.

4. Verfahren nach einem der Ansprüche 1 bis 3, **dadurch gekennzeichnet, daß** bei der Kompression der Schaumstoff (6) einer Schubkraft unterworfen wird, die eine Komponente quer zur Reißnahtrichtung besitzt.

5. Verfahren nach Anspruch 4, **dadurch gekennzeichnet, daß** ein Kompressicnswerkzeug (3) mit großem Reibbeiwert gegenüber der Kaschierungsfolie verwendet wird.

## Claims

1. Process for producing a tear seam in a surface laminate film which is foam-backed on the reverse side opposite to the visible face, and which covers the housing of an airbag at the side facing into the interior of a vehicle, whereby the tear seam is formed by a transverse weakening across the laminate film, by means of a laser beam directed from the reverse side through the foam, in such a way that it shows through as little as possible to the visible side,
**characterised by** the fact
that the foam (6) is compressed in the area of the laser action during the period when this action is taking place.

2. Process as in Claim 1, **characterised by** the fact that the compression of the foam (6) is effected on at least one side by rollers (3) which are guided, together with a laser (1), along the line of the tear seam which is to be formed.

3. Process as in Claim 1, **characterised by** the fact that the compression of the foam (6) is effected by a pressing tool in the form of a template.

4. Process as in one of Claims 1 to 3, **characterised by** the fact that the foam (6), when undergoing compression, is subjected to a transverse force which has one component which operates across the line of the tear seam.

5. Process as in Claim 4, **characterised by** the fact that a compression tool (3) is used which has a high coefficient of friction in relation to the laminate foil.

## Revendications

1. Procédé pour réaliser un joint de rupture dans une feuille de doublage moussée sur une face arrière opposée à une face visible, recouvrant le canal de guidage d'un air bag au niveau de l'extrémité indiquant l'espace intérieur d'un véhicule automobile, le joint de rupture étant formé par un affaiblissement de la section transversale de la feuille de doublage à l'aide d'un faisceau laser passant par la mousse depuis la face arrière de façon telle qu'il se dessine le moins possible sur la face visible,
**caractérisé en ce que** la mousse (6) est comprimée dans la zone de l'action du laser pendant la durée de cette action.

2. Procédé selon la revendication 1, **caractérisé en ce que** la compression de la mousse (6) est réalisée au moins d'un côté par des rouleaux (3) qui sont conduits conjointement à un laser (1) le long du joint de rupture à former.

3. Procédé selon la revendication 1, **caractérisé en ce que** la compression de la mousse (6) est réalisée par un outil de compression en forme de gabarit.

4. Procédé selon l'une des revendications 1 à 3, **caractérisé en ce que**, lors de la compression, la mousse (6) est soumise à une force de poussée qui possède une composante transversale à la direction du joint de rupture.

5. Procédé selon la revendication 4, **caractérisé en ce que** l'on utilise un outil de compression (3) qui possède un grand coefficient de frottement par rapport à la feuille de doublage.
